# EUROPÄISCHE PATENTSCHRIFT

(11) **EP 1 610 148 B1**
(45) Veröffentlichungstag und Bekanntmachung des Hinweises auf die Patenterteilung: **14.11.2007**
(21) Anmeldenummer: 05103638.2
(22) Anmeldetag: 02.05.2005
(51) Int. Cl.: G01S 7/28, H01Q 21/22

(54) **Radarsensor**
Radar sensor
Détecteur radar

(30) Priorität: 25.06.2004 DE 102004030755
(43) Veröffentlichungstag der Anmeldung: 28.12.2005
(73) Patentinhaber: ROBERT BOSCH GMBH, 70442 Stuttgart (DE)
(72) Erfinder: Miosga, Klaus-Dieter, 71522 Backnang (DE); Himmelstoss, Armin, 71554 Weissach im Tal (DE); Hildebrandt, Juergen, 73235 Weilheim (DE); Hauk, Joachim, 71272 Renningen-Malmsheim (DE); Klar, Michael, 71106 Magstadt (DE); Binzer, Thomas, 70565 Stuttgart (DE)

(56) Entgegenhaltungen:
- WO-A-20/04015445
- DE-A1- 19 719 953

## Beschreibung

Die vorliegende Erfindung betrifft einen Radarsensor, der Mikrowellenstrahlung aussendet und an Objekten innerhalb des Sensorerfassungsbereichs reflektierte Teilstrahlung empfängt, wobei zum Senden und Empfangen jeweils mehrere Antennen vorgesehen sind und wobei die Sendeleistung der äußeren Antennen geringer ist als die Sendeleistung der inneren Antennen. Dies geschieht, indem die Sendeleistung mittels Kopplern verringert wird, wobei die Koppler vorteilhafterweise als Wilkinson-Leistungsteiler ausgeführt sein können.

### Stand der Technik

Aus der Veröffentlichung "Adaptive Fahrgeschwindigkeitregelung ACC" veröffentlicht im April 2002 (ISBN-3-7782-2034-9) ist im Kapitel "Radar-Baugruppen" auf den Seiten 10 bis 14 der Aufbau eines Mikrowellensensors zur Abstands- und Geschwindigkeitsmessung für Kraftfahrzeuganwendungen beschrieben. An dieser Stelle wird eine Hochfrequenzstruktur gezeigt, mittels der Sendesignale über einen ersten Ringkoppler an eine Patchantenne geleitet werden und die Empfangssignale der Patchantenne über den ersten Ringkoppler an einen zweiten Mischerring weitergeleitet werden, wobei der Mischerring auch die Sendesignale des ersten Ringhybrides erhält und der Mischerring mittels zweier Mischdioden aus dem Sendesignal und dem Empfangssignal ein Zwischenfrequenzsignal erzeugt, das mittels einer nachgeschalteten Signalverarbeitung zur automatischen Längsregelung eines Kraftfahrzeugs ausgewertet wird.

Aus der DE 107 19 953 A1 ist ein Kraftfahrzeug-Radarsensor bekannt mit einer Antennenanordnung, bestehend aus einem fokussierenden Mittel und mindestens drei ersten Erregerelementen, die in Verbindung mit dem fokussierenden Mittel mindestens drei, sich allenfalls teilweise überlappende Antennenkeulen ausbilden und die schaltbar oder permanent mit ersten Sende- und/oder Empfangsschaltkreisen des Radarsensors verbindbar oder verbunden sind, wobei mindestens ein weiteres Erregerelement vorhanden ist, weiches zu einem der ersten Erregerelemente derart unmittelbar parallel geschaltet ist, daß diese beiden Erregerelemente ihre Signale gemeinsam von ein und demselben Sendeschaltkreis erhalten bzw. gemeinsam an ein und denselben Empfangsschaltkreis liefern.

### Kern und Vorteile der Erfindung

Da die Mikrowellensende- und -Empfangseinrichtungen für Automobilanwendungen in Folge stärkerer Miniaturisierung immer kleiner werden und auch deren Gehäuseabmessungen für einen möglichst praktikablen Einbau an der Fahrzeugvorderseite immer kleiner gewünscht werden, ergibt sich der Nachteil, dass die dielektrischen Linsen, die im Strahlengang der beschriebenen Patchantennen angeordnet sind, immer kleiner werden müssen, wodurch die Sende-/Empfangscharakteristik des Sensors hierdurch breiter wird, als es für eine sichere und zuverlässige Fahrzeugführung sinnvoll ist. Der Kern der vorliegenden Erfindung ist es demnach, eine Vorrichtung anzugeben, mittels der es möglich ist, einen Radarsensor zu realisieren, dessen Richtcharakteristik, bestehend aus mehreren Teilstrahlen, trotz geringster baulicher Abmessungen des Gesamtsensors stark zu bündeln. Erfindungsgemäß wird dies durch die Merkmale des unabhängigen Anspruchs gelöst. Vorteilhafte Weiterbildungen und Ausgestaltungen ergeben sich aus den Unteransprüchen.

Vorteilhafterweise wird die Sendeleistung der äußeren Antennen gegenüber der Sendeleistung der inneren Antennen mittels Kopplern verringert.

Weiterhin ist es vorteilhaft, dass die Koppler zur Sendeleistungsverringerung als Wilkinson-Leistungsteiler ausgeführt sind.

Weiterhin ist es vorteilhaft, dass der Leistungsverlust der von den Antennen empfangenen und an den Zwischenfrequenz-Ausgängen abgegebenen Leistung für alle Empfangskanäle im Wesentlichen gleich ist.

Weiterhin ist es vorteilhaft, dass die Antennen als Patchantennen ausgeführt sind.

Vorteilhafterweise ist vor den Antennenelementen eine dielektrische Linse zur Parallelisierung und Bündelung der Sende- und Empfangsstrahlung vorgesehen.

Vorteilhafterweise werden zum Senden und Empfangen die gleichen Antennen verwendet.

Weiterhin ist es vorteilhaft, dass vier Sende- und Empfangskanäle vorgesehen sind, wobei die Sendeleistung der beiden zwei äußeren Kanäle gegenüber der Sendeleistung der zwei inneren Kanäle verringert wird.

Weiterhin ist es vorteilhaft, dass der Radarsensor in einem Kraftfahrzeug zur adaptiven Abstands- und Geschwindigkeitsregelung verwendbar ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in den Zeichnungen.

### Zeichnungen

Nachfolgend werden Ausführungsbeispiel der Erfindung anhand von Zeichnungen erläutert. Es zeigen:
- Figur 1: ein Antennendiagramm, in dem die Empfangscharakteristiken eines Radarsensors mit erfindungsgemäßer Vorrichtung und eines Radarsensors ohne die erfindungsgemäße Vorrichtung dargestellt sind,
- Figur 2: ein Antennendiagramm, in dem die Empfangscharakteristiken eines vierstrahligen Radarsensors mit der erfindungsgemäßen Vorrichtung und eines vierstrahligen Radarsensors ohne die erfindungsgemäße Vorrichtung dargestellt sind und
- Figur 3: eine Schaltungsanordnung eines Ausführungsbeispiels der erfindungsgemäßen Vorrichtung.

### Beschreibung von Ausführungsbeispielen

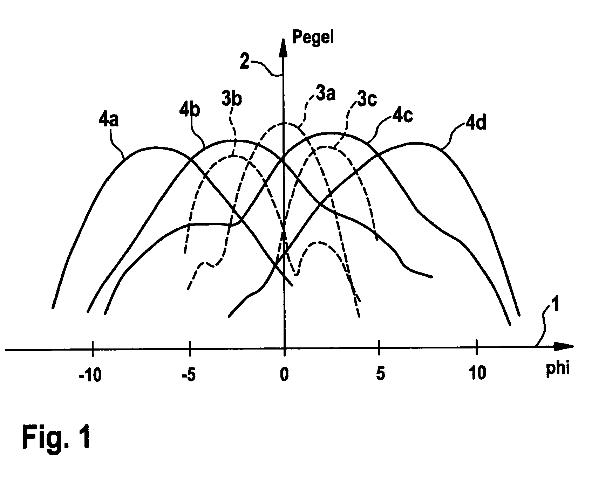

In Figur 1 ist das Sende- und Empfangsdiagramm zweier Radarsensoren dargestellt. Auf der Abszisse 1 ist der Azimutwinkel phi des Radarsensors aufgetragen und auf der Ordinate die Pegel der jeweiligen Empfangskanäle der Sensoren dargestellt. Ein erster Radarsensor, der ohne die erfindungsgemäße Vorrichtung aufgebaut ist, ist durch die 3 Kurven 3a, 3b und 3c, die gestrichelt aufgezeichnet sind, dargestellt. Bei diesem Radarsensor handelt es sich um einen dreistrahligen Radarsensor, der zur Fokussierung und Parallelisierung der Mikrowellenstrahlung eine dielektrische Linse aufweist, die einen vergleichsweise großen Durchmesser von beispielsweise 75 mm aufweist. Diese dielektrische Linse parallelisiert und fokussiert die Mikrowellenstrahlung der drei Patchantennen, wobei für jeden Sende- und Empfangskanal jeweils eine Antenne vorgesehen ist. Weiterhin ist in Figur 1 das Sende- und Empfangsdiagramm eines weiteren Radarsensors dargestellt, der zum einen vier Kanäle aufweist, d.h., es sind vier Sende- und Empfangsantennen, die vorzugsweise als Patchantennen ausgeführt sein können, vorhanden. Weiterhin ist dieser vierstrahlige Sensor in seinen Baugrößen kleiner, so dass beispielsweise die dielektrische Linse, mittels der die Sende- und Empfangsstrahlen parallelisiert und fokussiert werden, nur noch beispielsweise 50 mm im Durchmesser hat, so dass hierdurch die einzelnen Strahlen der Einzelantennen sehr breit werden. Da hierdurch Objekte mit starken Empfangssignalpegeln erkannt werden, die sich auf einer Nachbarspur oder am Fahrbahnrand befinden, kommt es oftmals zur Überlagerung dieser Ziele, wobei hierbei auch relevante Zielobjekte durch unrelevante Objekte überdeckt werden können. Durch die erfindungsgemäße Vorrichtung soll demnach die Strahlungscharakteristik des Radarsensors trotz der dielektrischen Linse mit geringerem Durchmesser, schmäler gestaltet werden.

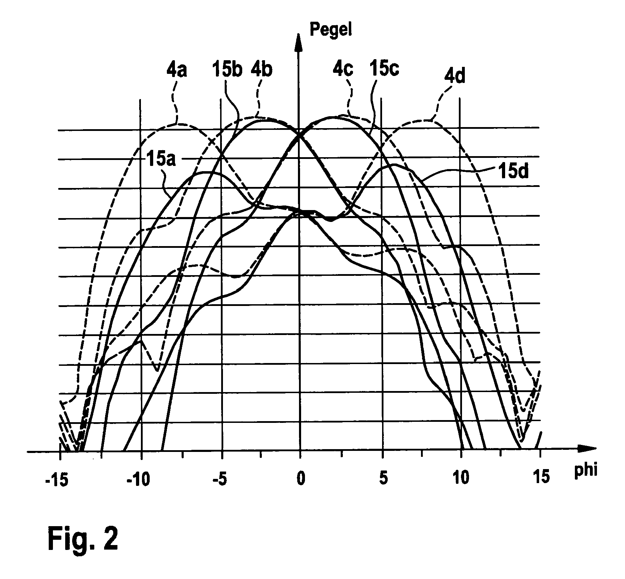

In Figur 2 sind die Empfangscharakteristiken zweier vierstrahliger Radarsensoren aufgetragen. Ebenfalls wie in Figur 1 ist der Azimutwinkel phi des Radarsensors auf der Abszisse aufgetragen. Die Ordinate zeigt den Pegel der Empfangskanäle der Sensoren in Abhängigkeit des Azimutwinkels phi auf. Der vierstrahlige Radarsensor, bei dem alle vier Kanäle mit der gleichen Leistung senden und alle Kanäle das gleiche Empfangsverhalten aufweisen ist durch die Kurven 4a bis 4d dargestellt, deren Maximalwerte alle im wesentlichen auf dem gleichen Pegelniveau liegen. Weiterhin ist die Empfangscharakteristik des vierstrahligen Radarsensors dargestellt, der die erfindungsgemäße Vorrichtung aufweist, indem dieser mit den beiden äußeren Antennen mit weniger Leistung sendet als die beiden inneren Antennen. Diese Empfangscharakteristik ist durch die Kurven 15a bis 15d dargestellt, bei denen die beiden äußeren Kurven 15a und 15d einen signifikant niedrigeren Empfangspegel aufweisen als die beiden inneren Kanäle 15b und 15c. Durch die Absenkung der Empfangscharakteristik der äußeren Kanäle vermeidet man eine Überstrahlung der dielektrischen Linse, die Teil des Radarsensors ist, wodurch man eine Richtcharakteristik erhält, die hauptsächlich auf die eigene Fahrspur ausgerichtet ist.

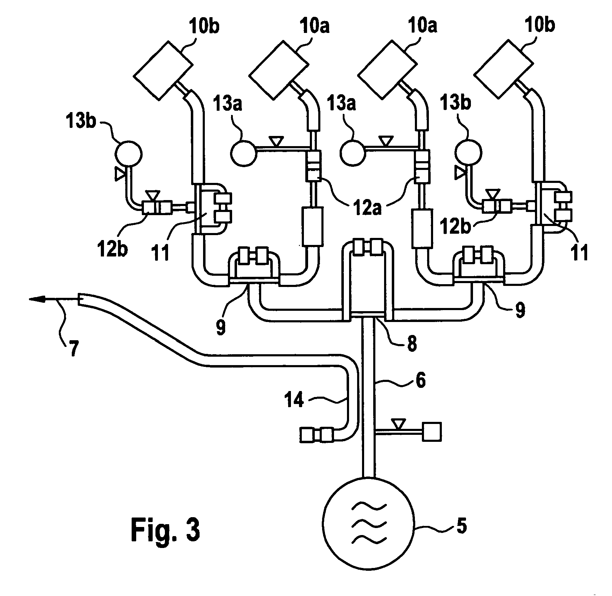

Hierzu eignet sich die Vorrichtung, die gemäß Figur 3 dargestellt ist, in der die Hochfrequenzschaltung eines vierstrahligen Radarsensors dargestellt ist. Zu erkennen ist eine Mikrowellenquelle 5, in der die gewünschte Sendefrequenz erzeugt wird und beispielsweise zusätzlich in der Sendefrequenz moduliert wird. Die Sendesignale werden von der Mikrowellenquelle 5 auf eine Mikrostreifenleitungsstruktur gekoppelt, wo sie mittels der Zuleitung 6 geführt wird. Zusätzlich kann die Zuleitung 6 einen Leitungskoppler 14 aufweisen, mit dem ein Teil der Sendeleistung ausgekoppelt wird und einer Monitorleitung 7 zugeführt wird, die diese an eine Frequenzregelung weiterleitet, in der die Sendefrequenz des Mikrowellenoszillators 5 analysiert wird und regelnd auf die Mikrowellenquelle 5 eingewirkt werden kann. Der Hauptteil der Sendeleistung der Zuleitung 6 wird an einen 3dB-Leistungsteiler 8 geführt, an dem die Sendeleistung zu etwa gleichen Teilen auf zwei Leitungen aufgeteilt wird. Diese beiden Leistungen führen zu zwei weiteren 3dB-Leistungsteilern 9, an denen die Sendeleistung abermals zu etwa gleichen Teilen auf die vier Sende- und Empfangskanäle aufgeteilt wird. Die einzelnen Sende- und Empfangskanäle weisen hierzu Antennen 10 auf, mittels denen die Mikrowellenstrahlung ausgesendet und reflektierte Teilwellen empfangen werden können und die vorteilhafterweise als Patchantennen ausgeführt sind. Diese Patchantennen können vorteilhafterweise entlang einer horizontal ausgerichteten Linien aufgereiht sein, um den Azimutwinkel vorausbefindlicher Objekte zu detektieren. Zwischen den 3dB-Leistungsteilern und Patchantennen 10a sind im Falle der inneren Sende- und Empfangskanäle Mischerdioden 12a in Serie geschaltet, die auf das Sendeverhalten keinen wesentlichen Einfluss haben. Im Empfangsfall werden diese Mischerdioden 12a infolge ihrer nichtlinearen Kennlinie und einer Vorspannung in Folge der Sendeleistung als Mischer verwendet, so dass das Empfangssignal mit dem Sendesignal gemischt wird und ein Zwischenfrequenz-Ausgangssignal, das ein Mischprodukt aus Sende- und Empfangssignal darstellt, an den Zwischenfrequenz-Ausgängen 13a abgreifbar ist. Da die beiden äußeren Sende- und Empfangskanäle in ihrer Sendeleistung verringert werden sollen, um eine schmale Sende- und Empfangscharakteristik zu erreichen, wurde erfindungsgemäß zwischen den 3dB-Leistungsteilern 9 und den Patchantennen 10b der äußeren beiden Kanäle jeweils ein Wilkinson-Teiler vorgesehen, der derart geschaltet ist, dass die Sendeleistung, die der3dB-Leistungsteiler 9 zuführt, zum überwiegenden Teil an die Mischerdioden 12b ausgegeben wird und nur ein geringer Teil der Sendeleistung an die äußeren Patchantennen 10b zu Sendezwecken abgegeben wird. Die von den äußeren Patchantennen 10b empfangene Leistung wird wiederum dem Wilkinson-Teiler 11 zugeführt, der wiederum den Großteil der Leistung an die Mischerdioden 12b abgibt und nur den kleinsten Teil der Leistung an den 3dB-Leistungsteiler 9 zurückfließen lässt. Hierdurch wird erreicht, dass im Sendefall die äußeren beiden Antennenkanäle mit einer geringeren Leistung senden als die mittleren beiden Sendekanäle, jedoch im Empfangsfall die äußeren beiden Empfangskanäle in etwa die gleichen Leistungspegel aufweisen, wie die inneren beiden Empfangskanäle. An die Wilkinson-Teiler 11, die in den äußeren beiden Kanälen vorgesehen sind, ist weiterhin jeweils eine Mischerdiode 12b vorgesehen, die durch Überlagerung der Sende- und Empfangssignale und deren Nichtlinearität eine Demodulation durchführen und ein Zwischenfrequenz-Signal an den Zwischenfrequenz-Ausgängen 13b bereitstellen. Hierdurch wird vermieden, dass bereits zwischen den Patchantennen und der Linse eine Bündelung entsteht, welche dazu führt, dass die Linse in der Breite nicht vollständig ausgeleuchtet wird und wodurch die beiden mittleren Sende- und Empfangsdiagramme in ihrer Breite verringert werden.

## Patentansprüche

1. Radarsensor, der Mikrowellenstrahlung aussendet und an Objekten innerhalb des Sensorerfassungsbereichs reflektierte Teilstrahlung empfängt, wobei zum Senden und Empfangen jeweils mehrere Antennen (10) vorgesehen sind und zum Senden und Empfangen die gleichen Antennen (10) verwendet werden, die als Patch-Antennen ausgeführt sind und wobei vor den Antennenelementen (10) eine dielektrische Linse zur Parallelisierung und Bündelung der Sende- und Empfangsstrahlung vorgesehen ist, **dadurch gekennzeichnet, dass** die Sendeleistung der äußeren Antennen (10b) geringer ist, als die Sendeleistung der inneren Antennen (10a) und der Leistungsverlust der von den Antennen (10a, 10b) empfangenen und an den Zwischenfrequenzausgängen (13) abgegebenen Leistung für alle Empfangskanäle im Wesentlichen gleich ist, indem in den Zuleitungen zu den äußeren Sende- und Empfangsantennen an den Abzweigungen zu den Zwischenfrequenz-Ausgängen (13) Wilkinson-Leistungsteiler derart vorgesehen sind, dass die beiden symmetrischen Anschlüsse des Wilkinson-Leistungsteilers mit den Antennen (10b) bzw. mit der Sendesignalquelle (5) verbunden sind und der unsymmetrische Anschluss des Wilkinson-Leistungsteilers (11) mit den Mischerdioden (12b) verbunden ist.

2. Radarsensor nach einem der vorhergehenden Ansprüche, **dadurch gekennzeichnet, dass** 4 Sende- und Empfangskanäle vorgesehen sind, wobei die Sendeleistung der beiden 2 äußeren Kanäle gegenüber der Sendeleistung der 2 inneren Kanäle verringert wird.

3. Radarsensor nach einem der vorhergehenden Ansprüche, **dadurch gekennzeichnet, dass** der Radarsensor in einem Kraftfahrzeug zur adaptiven Abstands- und Geschwindigkeitsregelung verwendbar ist.

## Claims

1. Radar sensor which emits microwave radiation and receives partial radiation reflected from objects within the sensor detection range, wherein a number of antennas (10) are in each case provided for transmitting and receiving and the same antennas (10), which are constructed as patch antennas, are used for transmitting and receiving and wherein a dielectric lens is provided in front of the antenna elements (10) for parallelizing and focusing the transmitting and receiving radiation, **characterized in that** the transmitting power of the outer antennas (10b) is less than the transmitting power of the inner antennas (10a) and the power loss of the power received by the antennas (10a, 10b) and delivered at the intermediate-frequency outputs (13) is essentially identical for all receiving channels **in that** Wilkinson power dividers are provided in the feed lines to the outer transmitting and receiving antennas at the branches to the intermediate-frequency outputs (13), in such a manner that the two balanced terminals of the Wilkinson power divider are connected to the antennas (10b) or to the transmit signal source (5), respectively, and the unbalanced terminal of the Wilkinson power divider (11) is connected to the mixer diodes (12b).

2. Radar sensor according to one of the preceding claims, **characterized in that** four transmitting and receiving channels are provided, wherein the transmitting power of the two outer channels is reduced compared with the transmitting power of the two inner channels.

3. Radar sensor according to one of the preceding claims, **characterized in that** the radar sensor can be used for adaptive distance and speed control in a motor vehicle.

## Revendications

1. Capteur radar émettant un rayonnement hyperfréquence et recevant le rayonnement partiel, réfléchi sur des objets dans la plage de réception du capteur, plusieurs antennes (10) respectivement prévues pour l'émission et la réception et les mêmes antennes (10) s'utilisent pour l'émission et la réception, ces antennes étant des antennes-étiquettes et en amont des éléments d'antennes (10) il y a une lentille diélectrique pour rendre parallèle et pour regrouper le faisceau d'émission et afin de réception,
**caractérisé en ce que**
la puissance d'émission des antennes extérieures (10b) est inférieure à la puissance d'émission des antennes intérieures (10a) et la perte de puissance de la puissance reçue par les antennes (10a, 10b) est fournie aux sorties de fréquences intermédiaires (13) pour tous les canaux de réception est pratiquement la même **en ce que** dans les conduites d'alimentation des antennes d'émission et de réception extérieures, aux dérivations avec les sorties de fréquences intermédiaires (13) on a prévu un diviseur de puissance Wilkinson de façon que les deux branchements symétriques du diviseur de puissance Wilkinson soient reliés aux antennes (10b) ou à la source de signaux d'émission (5) et le branchement asymétrique du diviseur de puissance Wilkinson (11) est relié aux diodes mélangeuses (12b).

2. Capteur radar selon la revendication 1,
**caractérisé en ce qu'**
il comporte quatre canaux d'émission et de réception, la puissance d'émission des deux canaux extérieurs étant diminuée par rapport à la puissance d'émission des deux canaux intérieurs.

3. Capteur radar selon l'une des revendications précédentes,
**caractérisé en ce que**
le capteur radar est appliqué à un véhicule automobile pour la régulation adaptative de la distance et de la vitesse.
